(19) **Europäisches Patentamt**

**European Patent Office**

**Office européen des brevets**

(11) **EP 0 989 739 B1**

(12) **EUROPEAN PATENT SPECIFICATION**

(45) Date of publication and mention
of the grant of the patent:
**11.01.2006 Bulletin 2006/02**

(51) Int Cl.:
*H04N 1/60* (2006.01)

(21) Application number: **99307517.5**

(22) Date of filing: **23.09.1999**

(54) **Method and apparatus for image quality adjustment**

Verfahren und Vorrichtung zur Bildqualitätsveränderung

Procédé et appareil pour ajustement de la qualité d'image

(84) Designated Contracting States:
**DE FR GB**

(30) Priority: **24.09.1998 JP 26925998**
**24.09.1998 JP 26926098**

(43) Date of publication of application:
**29.03.2000 Bulletin 2000/13**

(73) Proprietor: **SHARP KABUSHIKI KAISHA**
**Osaka-shi, Osaka 545-8522 (JP)**

(72) Inventors:
• **Takezawa, Hajime**
**Yamatokoriyama-shi,**
**Nara (JP)**
• **Nagai, Yoshinori**
**Ikoma-shi,**
**Nara (JP)**
• **Ito, Megumi**
**Nara-shi,**
**Nara (JP)**
• **Matsuoka, Atsuro**
**Yamatokoriyama-shi,**
**Nara (JP)**
• **Funayama, Ryuji**
**Nara-shi,**
**Nara (JP)**
• **Konya, Minehiro**
**Daito-shi,**
**Osaka (JP)**

(74) Representative: **Brown, Kenneth Richard et al**
**R.G.C. Jenkins & Co.**
**26 Caxton Street**
**London SW1H 0RJ (GB)**

(56) References cited:
**EP-A- 0 441 609** **DE-A- 4 418 782**
**US-A- 4 488 245**

**Description**

BACKGROUND OF THE INVENTION

Field of the Invention

The present invention relates to image processing technique used in word processors, personal computers, work stations, personal digital assistants, copying machines, scanners, facsimile machines, television receivers, video cassette recorders, video cameras, digital still cameras and so on. More specifically, the present invention relates to method and apparatus of image quality adjustment for adjusting an acquired image to a state desired by an operator, for example, for improving image quality of a photograph, as well as to a recording medium recording an image quality adjusting program.

Description of the Background Art

Recently, digitized images obtained through cameras, video cassette recorders and through the Internet come to be widely used in various fields. Sometimes these images are used as they are, and sometimes the images are used with image quality adjusted. As a method of adjusting image quality, automatic adjustment of image quality of a photograph or an image using an image processing apparatus provided in a personal computer, a word processor or the like has been studied to enable reduction in necessary working time, mass processing and easy and handy image quality adjustment of a prescribed quality without requiring special skill of the operator.

In an automatic image quality adjusting function employed in a general image processing software, a shadow point and a highlight point of luminance are found from luminance histogram distribution or the like. The histogram is expanded or compressed such that the shadow point is set to a specific luminance value, for example, the lowest possible luminance value which can be handled by the image processing apparatus, and similarly, the highlight point is set to a specific luminance value, for example, the highest possible luminance value which can be handled by the image processing apparatus, so that contrast is improved and the image quality is adjusted.

In the image processing method described above, the simplest manner of determining the shadow point is to determine a pixel having the lowest luminance among all the pixels in the image as the shadow point, and the simplest manner of determining the highlight point is to determine a pixel having highest luminance among all the pixels in the image as the highlight point.

Japanese Patent No. 2527715 discloses an image processing method which is another method of adjusting image quality.

In the image processing method disclosed in Japanese Patent No. 2527715, hue value of a pixel having a prescribed hue among pixels of an image is transformed to a desired hue component, so as to adjust image quality.

The image processing techniques described above, however, have the following problems.

First, in the method of improving contrast by finding a shadow point and a highlight point, it is possible to adjust a dark image to be lighter, or to transform image of which overall luminance is too high and appears white to an image of moderate lightness, by contrast adjustment of luminance. In an image of which color appearance is different from an actual object by some cause or other, however, difference or deviation in color cannot be adjusted, as contrast adjustment is performed with color appearance not addressed, and worse, the color deviation may become more noticeable by the contrast adjustment in some cases.

The image processing method disclosed in Japanese Patent No. 2527715 contemplates improved reproductivity of skin color in an image, by adjusting hue value of pixels within specific ranges of hue and saturation, which ranges are considered corresponding to distribution of human skin color, among pixels in an image, to be the hue value of preferred skin color. In this image processing method, however, though pixels having hue values and saturation which are assumed or estimated as human skin color are adjusted to have hue values of preferable skin color, the color appearance of the overall image is not adjusted, and an image of which color is different from that of the actual object is not adjusted.

Further, in this image processing method, the hue and saturation which are considered corresponding to human skin color are determined arbitrarily. When individual difference, variation in lighting condition and so on are taken into consideration, human skin can assume colors of wide range. When skins of many people are taken as objects, the hue and saturation ranges of colors which are to be addressed as skin colors would be very wide, and objects other than human skin that have such a color that corresponds the color of human skin would be similarly adjusted to the preferable skin color. Therefore, a specific object or an area of an image may highly possibly be transformed to an unnatural color. Conversely, when the ranges of the hue and saturation which are to be addressed as skin colors are limited to small ranges, it may be possible that some skin colors are not regarded as objects of adjustment, and the object of improving reproductivity of skin color cannot be attained. When an image has color deviation, such possibility would be higher, and the problem that color deviation other than skin color is left uncorrected still remains.

Conventionally, as is represented by the term "white balance", color adjustment in which a portion of an image which should have been originally white is adjusted to be whiter has been widely practiced. Japanese Patent Laying-Open No. 4-213291, for example, discloses an electronic image input apparatus which is a prior art example related to white balance adjustment on a specific image plane.

Further, it is a common practice for color adjustment to multiply each pixel value (generally, RGB is widely used) of pixels constituting an image by a constant, or to apply gamma function.

In the conventional technique, however, attention is paid only to a single color (generally, white), and colors of all pixels are adjusted using parameters determined to enhance or refine the single color. Therefore, though the noted color to which attention is paid can be well adjusted, colors of other portions are not much improved and, sometimes, even degraded.

When a faded photograph is read by a reading device such as a scanner and subjected to processing for recovering the original color, simple multiplication or gamma function cannot address the change of color caused by fading of photographic paper. Therefore, the object cannot be attained.

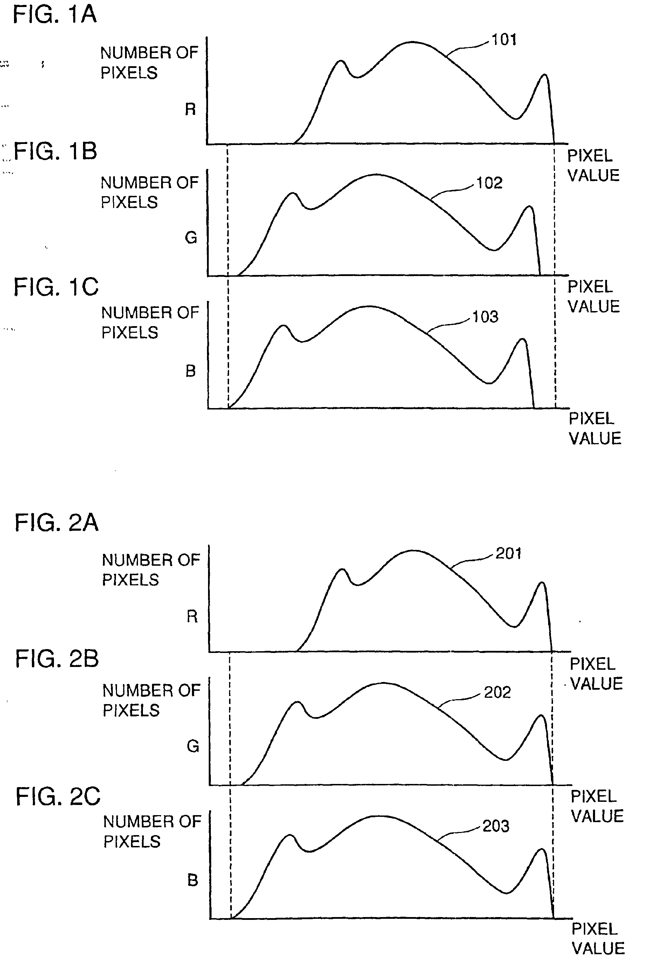

Figs. 1A to 1C schematically represent histograms of typical pixel values when a faded photograph is read by a scanner. In Figs. 1A to 1C, the ordinate represents the number of pixels of three primary colors (R, G and B), and the abscissa represents pixel values representing color density of the three primary colors (R, G and B).

As right side portions of respective histograms 101 to 103 are not aligned, it is presumed that a white portion on the image is not an ideal white but a little reddish. Further, as left side portions of respective histograms 101 to 103 are not aligned, it is presumed that a black portion on the image is reddish black. Further, as the R histogram 101 of Fig. 1A is biased to the right side, it is presumed that the overall image is reddish.

Figs. 2A to 2C schematically represent histograms resulting from conventional processing, exclusively paying attention to white, of the image having such histograms as shown in Figs. 1A to 1C. As the processing was performed paying attention only to white, right side portions of respective histograms 201 to 203 are aligned, whereas the left side portions are not aligned, and the overall balance is not good. Referring to Figs. 2A to 2C, it is considered that the white portion is made whiter while a portion which should be black remains reddish black, and the overall image still remains reddish.

If the process is performed paying attention to black, it would be the case that the portions corresponding to white are not aligned, and the overall balance is not adjusted. Further, it is naturally considered that even when other single color is used as a base for the processing, it is impossible to attain satisfactory balance of the overall image. Therefore, it is understood that the original colors are hard to recover by the conventional method.

As described above, in the conventional image quality adjusting method based on a single color, there is a problem that though the color to which attention is paid can be improved, remaining portions are left as they are or, worse, degraded.

EP-A-0 441 609 relates to a method and apparatus for color correction in photographic reproduction. A point on an image on a video display is located and a gamma correction curve look up table is used to show the effect of color correction. The gamma correction curve can be adjusted by adding or subtracting a bump function.

US 4,488,245 relates to a method and apparatus for detection and modification of color in an image, especially for recognition or detection of color values on a textured, shaded and highlighted surface. Using a weighting function, an operator can modify or insert colors and provide a smooth or hard edge.

DE-A-44 18 782 relates to a method and apparatus for adjusting colors in images using a color adjustment matrix to directly adjust the original image without converting to a second color space.

SUMMARY OF THE INVENTION

An object of the present invention is to provide an image quality adjusting apparatus capable of image quality adjustment to attain prescribed quality by a simple operation.

Another object of the present invention is to provide an image quality adjusting apparatus capable of adjusting image quality by accurately detecting color deviation, insufficient contrast and the like.

A still further object of the present invention is to provide an image quality adjusting apparatus capable of performing color adjustment such that a plurality of colors to which attention is paid can be improved simultaneously.

A still further object of the present invention is to provide an image quality adjusting method capable of image quality adjustment to attain prescribed quality by a simple operation.

A still further object of the present invention is to provide an image quality adjusting method capable of adjusting image quality by accurately detecting color deviation, insufficient contrast and the like.

A still further object of the present invention is to provide an image quality adjusting method capable of color adjustment to simultaneously improve a plurality of colors to which attention is paid.

A still further object of the present invention is to provide a medium recording an image quality adjusting program allowing image quality adjustment to attain a prescribed quality by a simple operation.

A still further object of the present invention is to provide a medium recording an image quality adjusting program allowing adjustment of image quality by accurately detecting color deviation, insufficient contrast and the like.

A still further object of the present invention is to provide a medium recording an image quality adjusting program allowing color adjustment to simultaneously improve a plurality of colors to which attention is paid.

Aspects of the invention are set out in the accompanying claims.

The image quality adjusting unit adjusts the image quality of the input original image based on pixel values of the area designated by the area designating apparatus, and therefore it becomes possible to perform image quality adjustment to attain a prescribed quality by a simple operation.

The foregoing and other objects, features, aspects and advantages of the present invention will become more apparent from the following detailed description of the present invention when taken in conjunction with the accompanying drawings.

BRIEF DESCRIPTION OF THE DRAWINGS

Figs. 1A to 1C represent exemplary histograms of pixel values of a faded image.

Figs. 2A to 2C represent histograms of pixel values of the image shown in Fig. 1 processed by a conventional image quality adjusting apparatus.

Fig. 3 shows an example of an appearance of the image quality adjusting apparatus in accordance with the present invention.

Fig. 4 is a block diagram schematically representing the configuration of the image quality adjusting apparatus shown in Fig. 3.

Fig. 5 is a functional block diagram of the image quality adjusting apparatus in accordance with a first embodiment of the present invention.

Fig. 6 schematically represents configuration of the image quality adjusting program in accordance with the embodiment of the present invention.

Figs. 7A and 7B represent images before and after image quality adjustment performed by the image quality adjusting apparatus in accordance with the first embodiment of the present invention.

Fig. 8 is a flow chart representing process steps of the image adjusting in accordance with the first embodiment of the present invention.

Figs. 9A to 9D represent images referred to for describing how an area is designated, an object area is extracted and object color is detected, in the image quality adjusting apparatus in accordance with the first embodiment of the present invention.

Fig. 10 is a graphic representation of a transform function used for color adjustment processing.

Fig. 11 is a flow chart showing in detail the color adjusting process (S6) of Fig. 8.

Fig. 12 is a flow chart showing in detail the luminance·saturation adjusting process (S7) of Fig. 8.

Figs. 13A and 13B are illustrations representing formation of a histogram and smoothing of the histogram.

Fig. 14 is a graphic representation of a transform function T generated based on a histogram parameter.

Fig. 15 is a graphic representation of correction function C generated based on the object color.

Fig. 16 is a graphic representation of another correction function C generated based on the object color.

Figs. 17A and 17B are graphic representations showing an example of correction of transform function T.

Figs. 18A and 18B are graphic representations showing another example of correction of the transform function T.

Figs. 19A to 19D are illustrations representing transformation utilizing HIS hexagonal color model.

DESCRIPTION OF THE PREFERRED EMBODIMENTS

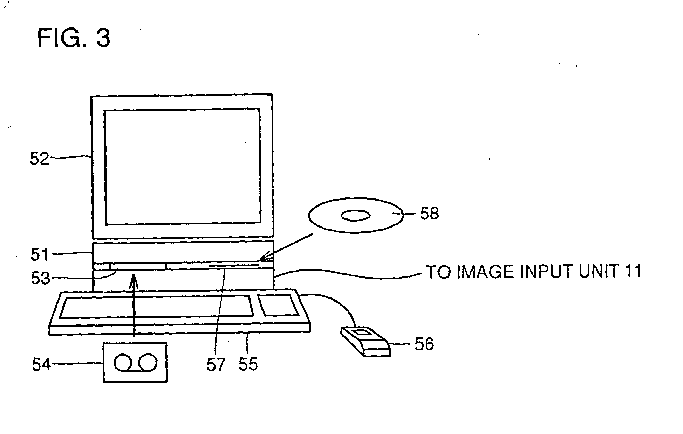

Fig. 3 shows an exemplary appearance of the image quality adjusting apparatus in accordance with the present invention. The image quality adjusting apparatus includes a computer body 51, a graphic display unit 52, a magnetic tape drive 53 to which a magnetic tape 54 is loaded, a keyboard 55, a mouse 56, a CD-ROM drive 57 to which a CD-ROM (Compact Disc-Read Only Memory) 58 is loaded, and an image input unit 11, not shown. The image quality adjusting program is supplied by a storage medium such as magnetic tape 54 or CD-ROM 58. Image quality adjusting program is executed by computer 51, and an operator performs image quality adjustment of the original image by operating keyboard 55 or mouse 56 while viewing the graphic display unit 52. The image quality adjusting program may be supplied to the computer 51 from another computer, through a communication circuit.

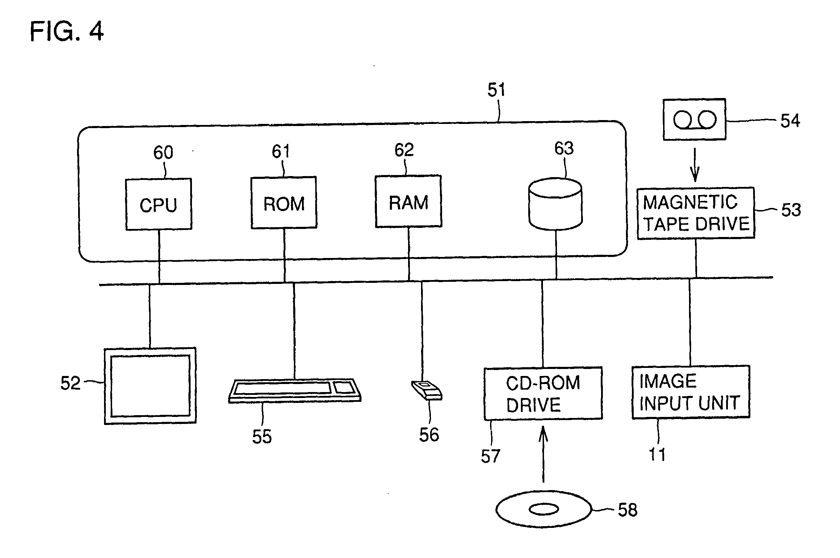

Fig. 4 is a block diagram showing an exemplary configuration of the image quality adjusting apparatus in accordance with the present invention. Computer 51 shown in Fig. 3 includes a CPU 60, an ROM (Read Only Memory) 61, an RAM (Random Access Memory) 62 and a hard disc 63. CPU 60 performs processing while inputting/outputting data to and from image input unit 11, graphic display unit 52, magnetic tape drive 53, keyboard 55, mouse 56, CD-ROM drive 57, ROM 61, RAM 62 or hard disc 63. The image quality adjusting program recorded on magnetic tape 54 or CD-ROM 58 is once stored in hard disc 63 from magnetic tape drive 53 or CD-ROM drive 57, through CPU 60. CPU 60 performs image quality adjustment of the original image by loading and executing the image quality adjusting program from hard disc 63 to RAM 62.

The following description specifically relates to adjustment of quality of an image or a photograph focusing on skin, including one's face. The present invention, however, is not limited thereto, and the description is only for convenience. The present invention may be applied to any photograph or image of any object, for example a landscape such as sky and ocean, of which processing is desired.

First Embodiment

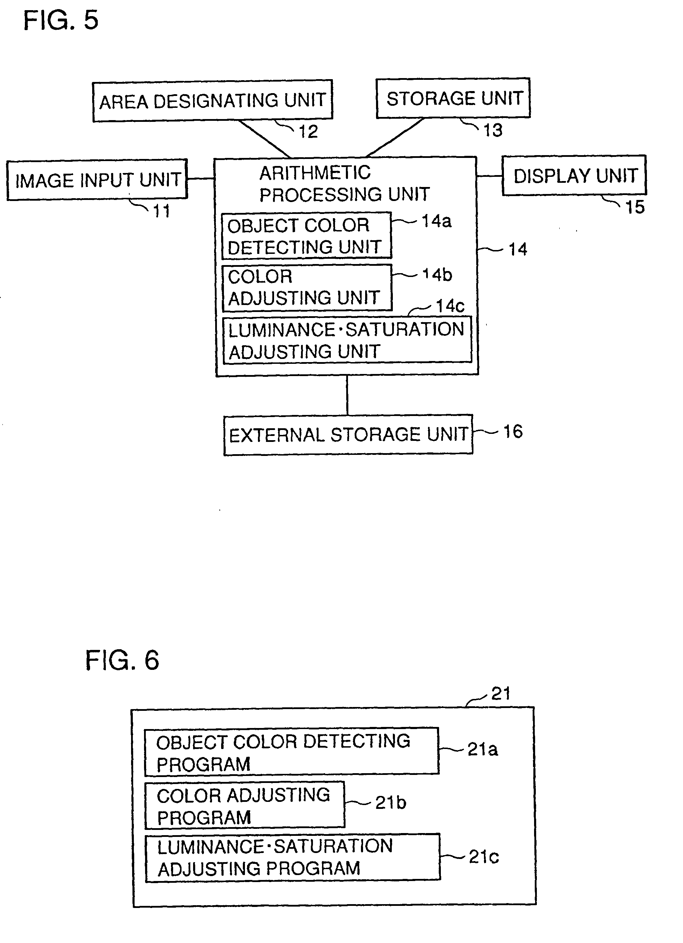

Fig. 5 is a block diagram representing functional configuration of the image quality adjusting apparatus in accordance with the first embodiment of the present invention.

Referring to Fig. 5, the image quality adjusting apparatus for adjusting quality of an image or a photograph includes an image input unit 11, an area designating unit 12, a storage unit 13, an arithmetic processing unit 14, a display unit 15 and an external storage unit 16.

Image input unit 11 is for receiving as an input, an original image of a photograph, for example, which is an object of processing. Namely, this is a unit for providing a signal (image signal) of the object image to the image quality adjusting apparatus.

The image signal here contemplates data in the shape of a matrix for two-dimensional image constituted by a plurality of pixels arranged in a matrix of rows and columns, in which information values 1 and 0 are respectively allotted to a black pixel and a white pixel, for example. More specifically, the data in the shape of a matrix represent digital signals having pixel data of respective pixels. Each pixel data contains position data representing position of the pixel in the two-dimensional image, as well as numerical value data representing display characteristic of the pixel. The numerical value data representing the display characteristic includes luminance data representing luminance of each monochromatic radiation of red, green and blue, for example.

As image input unit 11, other than the above described hard disc 13, magnetic tape drive 53 and CD-ROM drive 57, a device for reading signals stored in storage medium such as a floppy disk, an optical disk or a video tape may be used. In that case, the signals read from the storage medium by image input unit 11 are stored in storage unit 13. Therefore, on the recording medium, an image signal obtained by picking up image light from an object by an image pick up device (not shown) is stored. The image pick up device includes, for example, a scanner, a digital camera and a video camera.

An image input unit which has an image pick up device itself and the image signals obtained by which are directly stored in the storage unit 13 of the image quality adjusting apparatus without using any recording medium, may be used as image input unit 11.

The image signal may be generated by an apparatus and method other than the image pick up device described above. For example, the image signal may be of an image generated by a third party, other than the operator of the image quality adjusting apparatus, which is distributed by a recording medium such as CD-ROM. The image signals may be obtained beforehand, or may be obtained immediately preceding the image processing operation by the image quality adjusting apparatus, which will be described later.

Area designating unit 12 is for the user to designate an area of an image. Other than mouse 56 described above, a pointing device such as a track ball or a pen may be suitably used. The operator, using the pointing device such as a mouse as the area designating unit 12, designates a desired area, while viewing the original image input through the image input unit 11 and displayed on display unit 15, which will be described later. At this time, the designated area is stored in storage unit 13 and reflected on display unit 15, namely, displayed as a closed curve, for example. The area thus obtained is regarded as the designated area.

Storage unit 13 is for storing the designated area and image signals of the original image, and used as a temporary storage area necessary for image quality adjusting process and as a program storing area for various processings. RAM 62 mentioned above is the storage unit here.

External storage unit 16 represents, other than the magnetic tape drive 53 and CD-ROM drive 57, a storage unit capable of reading information on a recording medium such as disks including DVD (Digital Versatile Disc), a video tape and the like. When necessary information is not in storage unit 13, the information recorded on the recording medium, for example, the processing program or data may be transferred to storage unit 13 through external storage unit 16.

Display unit 15 may be a cathode ray tube (CRT) 52, a liquid crystal display unit or the like, for displaying, on a screen, the image data stored in storage unit 13 or the designated area. On the screen, the input original image is displayed, and the area input by the area designating unit 12 by the operator is displayed in the form of a closed curve, for example, on the original image. The display unit 15 also displays an output image generated by the image quality adjusting operation by the arithmetic processing unit 14, which will be described later.

Arithmetic processing unit 14 is for performing the main process of the present embodiment, and CPU 60 mentioned above is the arithmetic processing unit. Arithmetic processing unit 14 includes an object color detecting unit 14a for detecting color of an object to be processed, a color adjusting unit 14b for adjusting the color, and a luminance adjusting unit 14c for adjusting luminance, and performs the image quality adjusting process.

Arithmetic processing unit 14 performs the image quality adjusting process by using programs for respective processes stored in storage unit 13.

Fig. 6 represents an exemplary program for image quality adjustment.

As can be seen from Fig. 6, the image quality adjusting program includes an object color detecting program 21a, a color adjusting program 21b and luminance · saturation adjusting program 21c.

These programs for processing by arithmetic processing unit 14 may be stored in advance in storage unit 13, or may be stored on a recording medium 21 such as a floppy disk, an optical disk including CD-ROM or DVD, or a video tape, and read by external storage unit 16. All the processing programs need not be stored on recording medium 21, and at least one processing program may be recorded, among the aforementioned three programs for processing. In that case, the processing program not recorded on the recording medium may be stored in advance in storage unit 13. In this manner, capacity of storage unit 13 which is relatively expensive when compared with external storage unit 16 can be saved, and hence necessary cost can be reduced.

Image quality adjustment executed by the image quality adjusting apparatus in accordance with the first embodiment of the present invention will be described in the following. Here, description will be given assuming that the area designated by the operator is a human face.

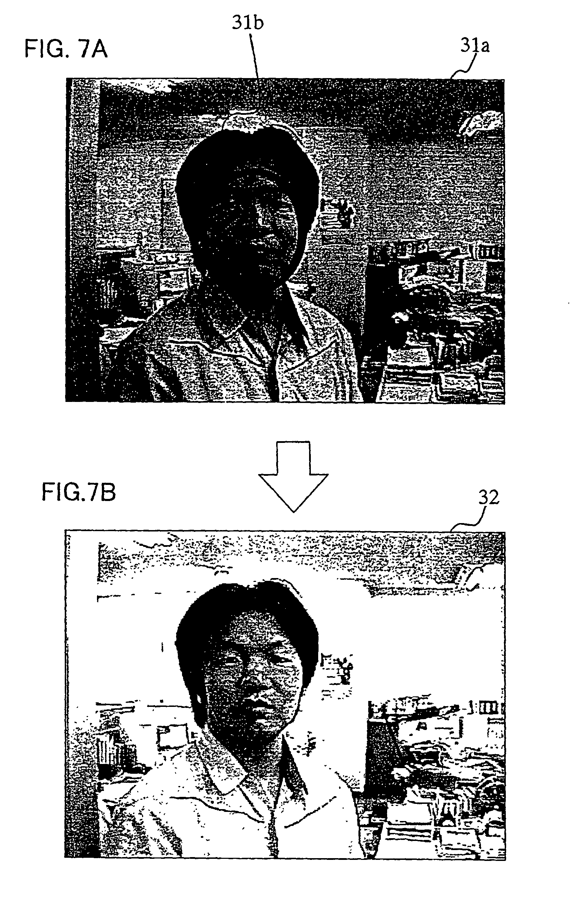

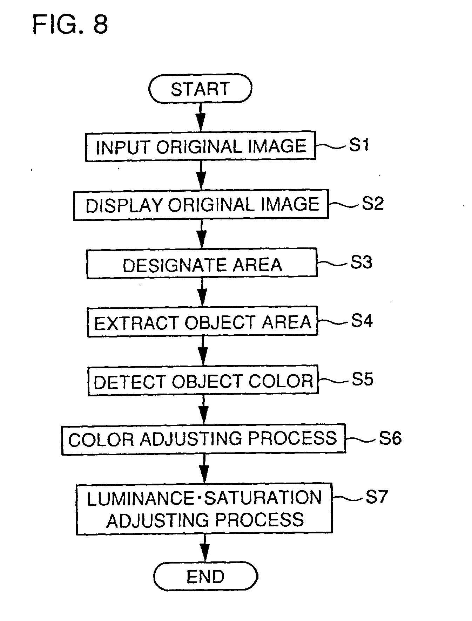

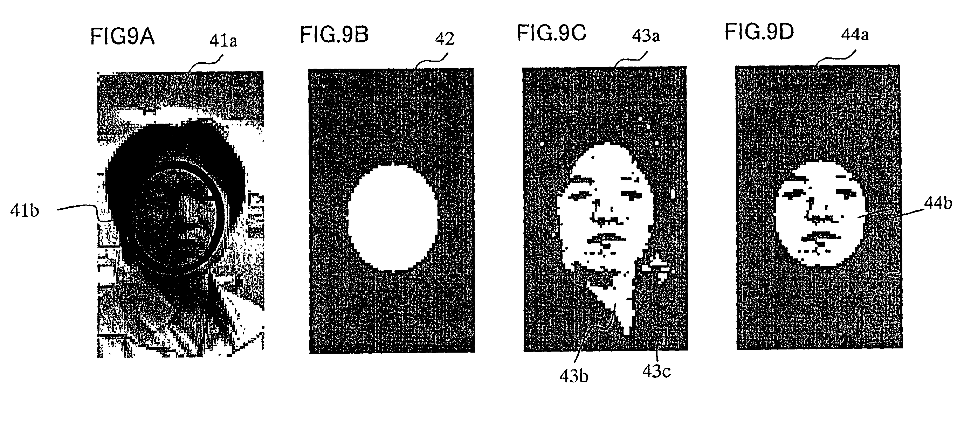

Figs. 7A and 7B represent the image quality adjusting operation effected by the present image quality adjusting apparatus, and Fig. 8 is a flow chart representing the flow of image quality adjustment in the image quality adjusting apparatus of the present embodiment. The operation will be described, additionally referring to Figs. 9 to 23.

Specific displays given in the image quality adjusting process performed by the image quality adjusting apparatus are as follows. Fig. 7A represents an original image 31a, and an operator designates an area 31b, designating the face of the object person. Thereafter, image quality adjusting process is performed, and the resulting image 32 is output as shown in Fig. 7B. More specifically, image quality adjusting process is performed based on the information of color, luminance or the like of designated area 31b.

The image quality adjusting process by the image quality adjusting apparatus is performed through the process steps shown in Fig. 8.

First, an original image is input (S1). More specifically, image input unit 11 stores an object original image 31a in storage unit 13.

Thereafter, the original image is displayed (S2). Namely, display unit 15 displays the original image 31a stored in storage unit 13 on the screen. Thereafter, area designation is performed (S3). The operator, while viewing the original image 31a displayed on display unit 15, designates an area to be processed, using area designating unit 12.

Thus, designated area 31b is displayed on original image 31a, as shown in Fig. 7A. The designated area is stored as area information, for example, as a series of coordinates or two-dimensional image data (mask image), in storage unit 13.

After the information of the designated area is stored in storage unit 13, the process of the next step S4 starts.

Then, the object area is extracted (S4).

Extraction of the object area will be described in detail with reference to Figs. 9A to 9D.

Figs. 9A to 9D are schematic views related to designation of the area, extraction of the object area and detection of object color, in the flow chart of Fig. 8. An image 41a of Fig. 9A represents a portion of original image 31a of Fig. 7A, and an area 41b corresponds to designated area 31b. In the following, image 41a, which is a part of original image 31a, will be considered the original image, and area 41b will be considered as designated area 31b.

On original image 41a of Fig. 7A stored in storage unit 13, the operator designates area 41b, using the area designating unit 12 described above. A mask image 42 representing the designated area of Fig. 7B is stored in storage unit 13. Object color detecting unit 14a of arithmetic unit 14 calculates pixel information on the original image corresponding to the designated area, that is, corresponding to white pixels of the mask image, with reference to mask image 42.

Here, average and variance of pixel values of the original image in the designated area, for example, are used as pixel information. Based on the pixel information, the original image 41a is divided into an object area corresponding to the area designated by the user, that is, area 43b represented by white pixels in image 43a of Fig. 9C, and other area, that is, area 43c (gray area) represented by black pixels in image 43a. The area 43b will be referred to as the object area, and image 43a will be referred to as object area image. In this manner, the object area is extracted.

There are numerous methods of extracting the object area from pixel information. As an example, an object area extracting method will be described in which pixel information includes average and variance of pixel values of the original image in the designated and in which hue value represents the pixel value.

**EP 0 989 739 B1**

In the following, the terms hue, saturation and luminance will be defined as follows. When numerical value data representing display characteristics of respective pixels are available, for example, when luminance of monochromatic radiations of red, green and blue are available, for example, based on the luminance of the monochromatic radiations, hue, saturation and luminance (intensity) transformed by HIS hexagonal color model popularly used in the field of image processing (hereinafter referred to as HIS) are used. Hue, saturation and luminance may be defined in accordance with different methods. For example, luminance may be an average value of luminance values of respective monochromatic radiations.

The HIS hexagonal color model will be described briefly in the following.

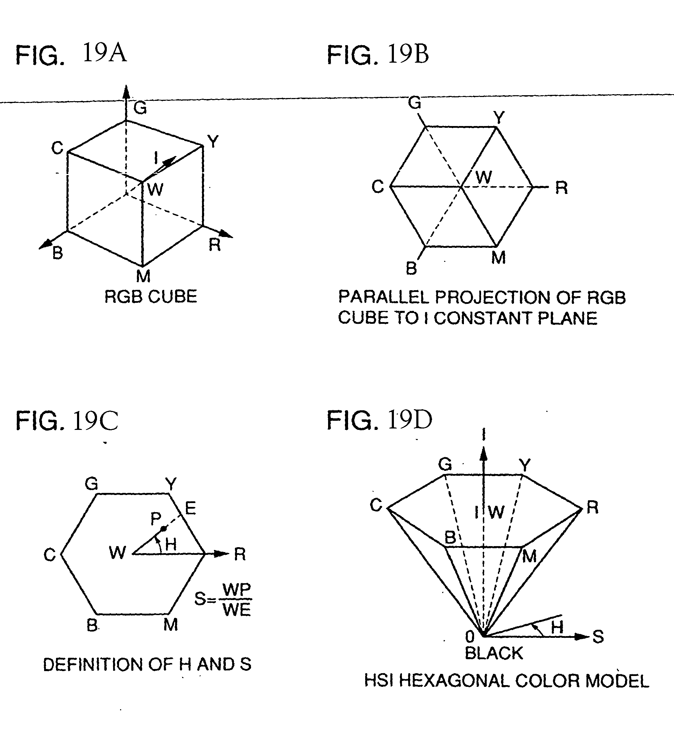

Assume a cube which is in contact with three axes in an RGB orthogonal coordinate system. Here, R, G and B and complementary colors thereof, that is, C (cyan), M (magenta), Y (yellow) satisfy such positional relation as represented by Fig. 19A.

Here, main diagonal axis of the RGB cube is intensity axis I, which is defined as

$$I = \max\{R, G, B\} \qquad (2.1.10)$$

Parallel projection of the RGB cube on a plane orthogonally intersecting the I axis results in a regular hexagon such as shown in Fig. 19B. With a given point P, hue H and saturation S are defined on a plane orthogonally intersecting the I axis and passing the point P, as shown in Fig. 19C. In this manner, a hexagonal color model such as shown in Fig. 19D is formed between RGB and HSI. The method of mutual transform is as follows. Here, it is assumed that the values R, G, B, S and I are in the range of [0, 1] and H assumes the value in the range of [0, $2\pi$].

(a) HSI transform

I is defined by the expression (2.1.10).

i) When I = 0
S and H are determined as follows.

$$\left.\begin{array}{l} S = 0 \\ H = \text{not determined} \end{array}\right\} \qquad (2.1.11)$$

ii) When I $\neq$ 0
first S is defined by the following expression.

$$S = (I - i)/I \qquad (2.1.12)$$

where i = min{ R, G, B}
(min is a function providing minimum value)

Thereafter, values r, g and b are calculated in accordance with the following equations.

$$\left.\begin{array}{l} r = (I - R)/(I - i) \\ g = (I - G)/(I - i) \\ b = (I - B)/(I - i) \end{array}\right\} \qquad (2.1.13)$$

Finally, H is defined in the following manner.

$$\left. \begin{array}{llll} \text{when} & R = I, & H = \dfrac{\pi}{3}(b - g) \\[2mm] \text{when} & G = I, & H = \dfrac{\pi}{3}(2 + r - b) \\[2mm] \text{when} & B = I, & H = \dfrac{\pi}{3}(4 + g - r) \end{array} \right\} \qquad (2.1.14)$$

Here, when H < 0, $2\pi$ is added to the value of H.

(b) HSI inverse transform

i) When S=0
Regardless of the value of H, the values of R, G and B are defined as follows.

$$R = G = B = I \qquad (2.1.15)$$

ii) When $S \neq 0$
First, values h, P, Q and T are calculated in the following manner.
when

$$H = 2\pi, \quad H = 0$$
$$H' = H / (\pi / 3) \qquad (2.1.16)$$
$$h = \text{floor}(H')$$

where floor (x) is a function providing maximum integer not larger than x

$$\left. \begin{array}{l} P = I \times (1 - S) \\[2mm] Q = I \times \{1 - S \times (H - h)\} \\[2mm] T = I \times \{1 - S \times (1 - H + h)\} \end{array} \right\} \qquad (2.1.17)$$

Then, values R, G and B are defined in the following manner, dependent on the value of h.

$$\left. \begin{array}{lllll} \text{when} & h = 0, & R = I, & G = T, & B = P \\ \text{when} & h = 1, & R = Q, & G = I, & B = P \\ \text{when} & h = 2, & R = P, & G = I, & B = T \\ \text{when} & h = 3, & R = P, & G = Q, & B = I \\ \text{when} & h = 4, & R = T, & G = P, & B = I \\ \text{when} & h = 5, & R = I, & G = P, & B = Q \end{array} \right\} \qquad (2.1.18)$$

When the average and the variance of hue values of pixels in the designated area are represented as $\mu_{hue}$ and $\sigma^2_{hue}$, respectively, probability density function p(x) for a given hue value x can be defined by the following expressions, assuming that distribution of hue values of pixels in the designated area is in accordance with normal distribution.

$$p(x) \sim N(\mu_{hue}, \sigma^2_{hue}) \equiv$$
$$p(x) = \frac{1}{\sqrt{2\pi}\sigma_{hue}} e^{-(x-\mu_{hue})^2/2\sigma^2_{hue}} \qquad (1)$$

By applying the hue value x of each pixel in the original image 41a as an argument of p(x) of the expression (1), probability value p is calculated. When the probability value p is not lower than a threshold value Pth set in advance, the pixel is regarded as a white pixel, and if the probability value p is smaller than Pth, the pixel is regarded as a black pixel, and in this manner, the object area image 43a can be generated. Thus, object area 43b, when the operator designated area 41b of original image 41a, can be extracted. As a result, the area of human face skin is extracted, as can be seen from Fig. 9C.

Thereafter, object color is detected (S5).

Detection of object color will be described in detail in the following.

For a region which is constituted by white pixels both in the object area image 43a shown in Fig. 9C and in mask image 42 generated by the designation by the operator shown in Fig. 9B, that is, for an area 44b represented by brightest pixels in image 44a of Fig. 9D, an average of pixel values in the corresponding original image 41a is calculated. Here, it is assumed that the original image 41a is a color image, and pixel values represent luminance values of respective monochromatic radiations (red, green and blue). Namely, calculating the average of pixel values means that average values mR, mG and mB of respective monochromatic radiations are calculated.

In this manner, the object color is detected.

Thereafter, color adjusting process is performed (S6).

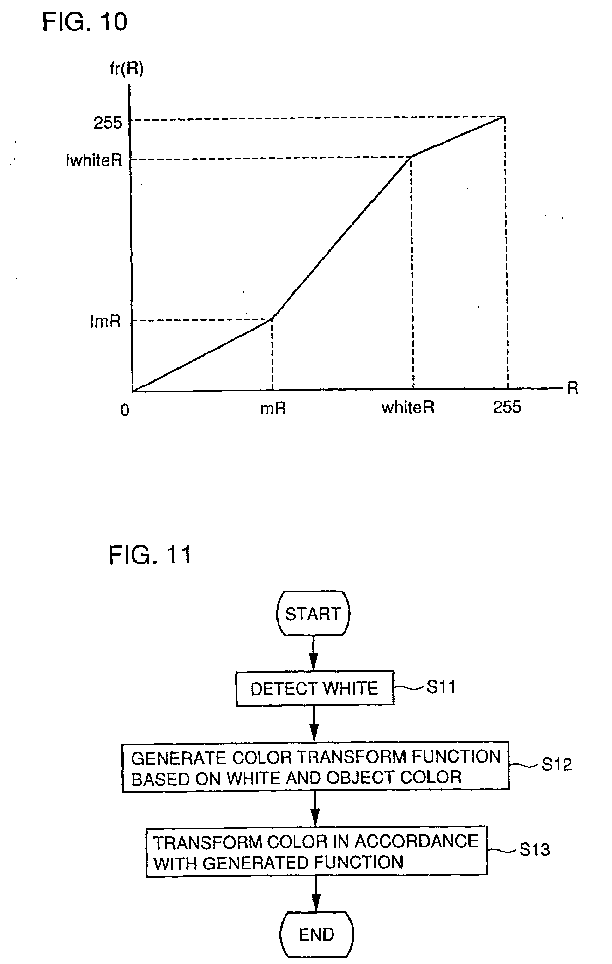

The color adjusting process will be described in detail in the following with reference to Figs. 10 and 11. Fig. 10 is a graph showing details of the color transform function for the color adjusting process, in the flow chart of Fig. 8. Fig. 11 is a flow chart showing details of the color adjusting process (S6) of the flow chart of Fig. 8. In the following, it is assumed that pixels in an image are represented by intensities of respective monochromatic radiations of red (R), green (G) and blue (B), that is, RGB, with the range of each value being 0 to 255.

Color transform function for each monochromatic radiation of red (R), green (G) and blue (B) is formed such that the object color detected in step S5 is adjusted to an ideal color found in advance and that color balance of the overall image is satisfactory.

In the present embodiment, the following functions are generated and used.

$$R' = fr(R) \qquad (2)$$

$$G' = fg(G) \qquad (3)$$

$$B' = fb(B) \qquad (4)$$

Here, arguments R, G and B of color transform functions of respective monochromatic radiations are pixel values of the image before transform, that is, of the original image, and R', G' and B' represent pixel values after the present color adjusting process.

In the present embodiment, respective color transform functions fr, fg and fb mentioned above are generated to satisfy the following four conditions.

<Condition 1>

When respective object colors detected in step S5 are represented as mR, mG and mB and pixel values of ideal colors having the same brightness as the object colors are represented by ImR, ImG and ImB, the following equations are satisfied.

$$\mathrm{Im}\,R = fr(mR) \tag{5}$$

$$\mathrm{Im}\,G = fg(mG) \tag{6}$$

$$\mathrm{Im}\,B = fb(mB) \tag{7}$$

The values ImR, ImG and ImB may be the values obtained by projecting mR, mG and mB on a color space such as the HSI color space, maintaining the intensity value I, adjusting hue H and saturation S to those of ideal colors, and inverse transforming the resulting values to RGB space.

<Condition 2>

The overall image is analyzed, and a color which is considered to be white is detected (S11). The pixel values of this portion are represented as whiteR, whiteG and whiteB.
When we represent pixel values of ideal white having the same brightness as the detected portion by IwhiteR, IwhiteG and IwhiteB, the following equations are satisfied.

$$IwhiteR = fr(whiteR) \tag{8}$$

$$IwhiteG = fg(whiteG) \tag{9}$$

$$IwhiteB = fb(whiteB) \tag{10}$$

There are various methods available for detecting the color (whiteR, whiteG and whiteB) which is considered white. In the present embodiment, average values of pixel values of those pixels which have colors close to white among the pixels of the original image are used as whiteR, whiteG and whiteB.
The values IwhiteR, IwhiteG and IwhiteB may be the values obtained by projecting values whiteR, whiteG and whiteB to the HIS color space, for example, maintaining intensity I and adjusting hue H and saturation S to those values of ideal white (H = arbitrary value, S = 0), and by inverse transforming the resulting values to RGB space.

<Condition 3>

The following equations are satisfied.

$$0 = fr(0) \tag{11}$$

$$0 = fg(0) \tag{12}$$

$$0 = fb(0) \tag{13}$$

<Condition 4>

The following equations are satisfied.

$$255 = fr(255) \tag{14}$$

$$255 = fg(255) \qquad (15)$$

$$255 = fb(255) \qquad (16)$$

Thereafter, color transform function based on white and the object color is generated (S12).

There can be indefinite number of color transform functions simultaneously satisfying the above described four conditions. In the present embodiment, one obtained by connecting, by lines, four points ((0, 0), (mX, ImX), (whiteX, IwhiteX), (255, 255)) (where X is any of red (R), green (G) and blue (B) components) provided in accordance with the above described conditions is used.

Fig. 10 shows the four points in accordance with the above described conditions ((0, 0), (mR, ImR), (whiteR, IwhiteR), (255, 255)) for red (R) component connected by lines. Color transform functions for green (G) and blue (B) components can also be generated in the similar manner.

For example, color transform function fr(R) of the expression (2) can be defined in the following manner for the example of Fig. 10.

when $0 \leqq R < mR$:

$$fr(R) = (ImR/mR) \times R \qquad (2\text{-}1)$$

when $mR \leqq R < whiteR$:

$$fr(R) = ((IwhiteR - ImR) / (whiteR - mR))$$
$$\times (R - mR) + ImR \qquad (2\text{-}2)$$

when $whiteR \leqq R \leqq 255$:

$$fr(R) = ((255 - IwhiteR) / (255 - whiteR))$$
$$\times (R - whiteR) + IwhiteR \qquad (2\text{-}3)$$

Finally, using the generated color transform function, color adjustment is performed (S13).

Thus, white is made whiter, overall white balance is adjusted, and the object color attains to ideal color. Since only color adjustment takes place here, brightness is not changed. The color adjusted image (not shown) converted from original image 31a by the color adjusting process is stored in storage unit 13.

In this manner, color adjusting process is performed.

The description will be returned to the flow chart of Fig. 8.

Next, luminance and saturation adjusting process (S7) is performed.

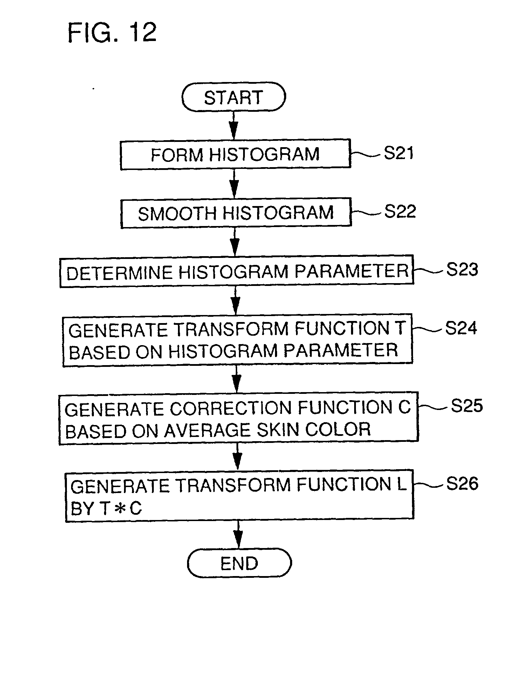

The luminance·saturation adjusting process will be described in detail in the following with reference to Figs. 12 to 18.

Fig. 12 shows the details of the luminance · saturation adjusting process (S7) of the flow chart shown in Fig. 8, representing the process for generating a transform function for adjusting luminance and saturation, utilizing information of the object color.

First, based on the luminance and saturation of each pixel of the input image, a luminance histogram and a saturation histogram are formed (S21).

Thereafter, in order to suppress abrupt change in the histograms obtained in step S21, smoothing is performed so that the histograms have smooth shape (S22).

More specifically, for each element, the element value of itself is added to element values of several left and right elements with the element in question being in the center, an average value is calculated, and the average value is considered the element value of the element of interest. This suppresses influence of local noise involved in the image, whereby essential characteristic of the image appears on the characteristic of the histogram.

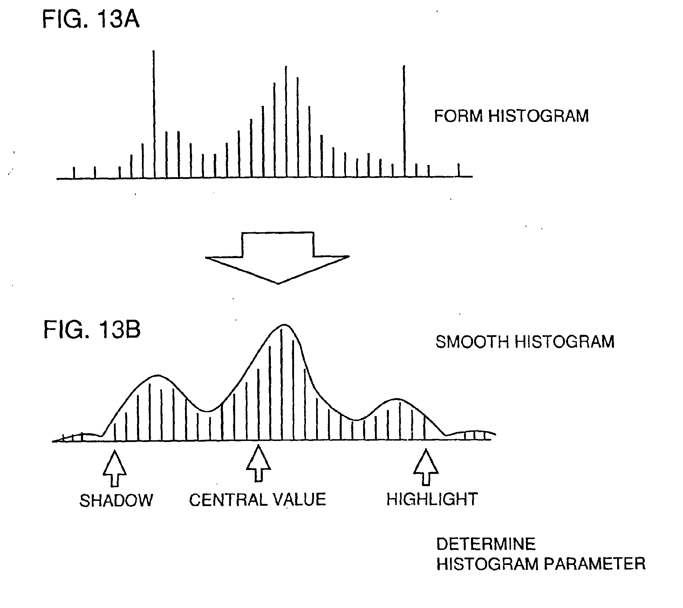

Fig. 13A and 13B schematically represent the process of steps S21 and S22. Fig. 13A represents the generated histogram, and Fig. 13B represents the histogram after smoothing.

A histogram parameter is determined (S23) from the smoothed histogram obtained in step S22.

Here, the histogram parameter refers to a highlight value, a shadow value and a central value intermediate therebetween, which are represented as specific element numbers in the histogram. Figs. 13A and 13B are schematic representations thereof.

Here, highlight refers to the upper limit value, an element having element number larger than which can be regarded as not contributing to representation of the image characteristic. Shadow value represents the lower limit value, an element having element number smaller than which can be regarded not contributing to representation of the image characteristic.

As to the specific method of calculating the highlight, it can be found as an element having an element value exceeding a value (hereinafter referred to as a reference value) obtained by dividing total element values of the histogram by a prescribed value and closest to the maximum element number. The shadow can be found as an element having the element value exceeding the aforementioned reference value and closest to the minimum element number. The prescribed value for dividing the total element values of the histogram mentioned above may be the total number of elements (= maximum element number - minimum element number).

The method of calculating highlight and shadow elements is not limited thereto, and other methods may be used.

The central value is defined as that element number histogram values (total of element values) of left and right sides of which are the same.

Thereafter, based on the histogram parameter calculated in step S23, transform function T(x) for adjusting the overall histogram is generated (S24). Details of the generation of transform function T(x) will be described later.

Thereafter, based on the object color, correction function C(x) for correcting the transform function T(x) found in step S24 is generated (S25).

Details of generated of correction function C(x) will be given later.

Finally, by multiplying the transform function T(x) calculated in step S24 by correction function C(x) calculated in step S25, final transform function L(x) is generated (S26).

The final transform function L(x) is defined as follows.

$$L(x) = C(T(x)) \hspace{4cm} (17)$$

The transform function T(x), correction function C(x) and the final transform function L(x) described above can be generated for each of the luminance and saturation. More specifically, transform functions of luminance and saturation are formed independently, in accordance with the above described process steps. The detailed contents of processing may or may not be the same. For example, in generating a transform function of saturation, when an area of low saturation is desired to be not much changed, the shadow information may not be utilized among histogram parameters calculated in step S23 and the minimum element number may be fixed, so that transform of the low saturation area can be suppressed.

Details of the steps S24 and S25 will be described in the following.

Description will be given mainly focusing on generation of transform function related to luminance, representing brightness.

Further, details of the process of step S24, that is, the step of generating transform function T(x) based on histogram parameters (highlight, shadow, central value) calculated in step S23 will be described.

In the present embodiment, details of generating transfer function emphasizing the characteristic of the histogram utilizing S-shaped curvilinear function based on logarithmic function will be described. By generating a transform function T(x) of brightness, that is, luminance, it becomes possible to adjust contrast of the overall image.

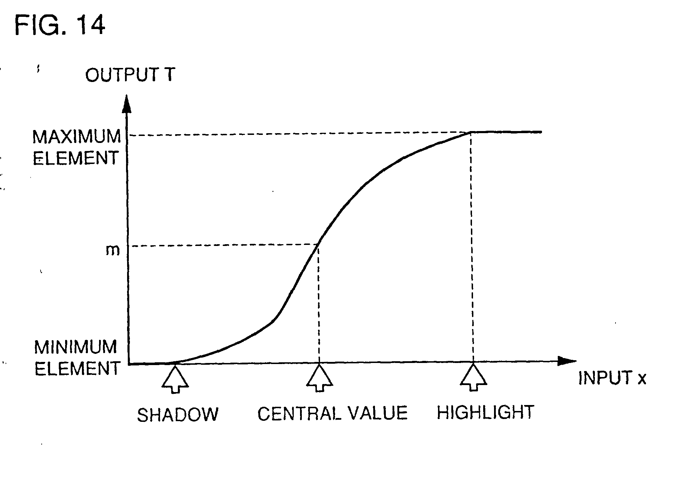

Fig. 14 is a schematic diagram representing how the transform function T(x) emphasizing the feature of the histogram by S-shaped curvilinear function is generated.

By the application of logarithmic function between the highlight point to the central value and between the central value and the shadow point, transform function T(x) comes to be a function in the shape of S-shaped curve as a whole, with the central value being the center.

First, between the highlight point to the central value, a convex curve is formed by the application of the following equation.

$$T(x) = (\text{maximum element} - m) \times$$
$$\log (x/\text{central value}) / \log (\text{highlight/central value}) + m \qquad (18)$$

Next, between the central value and the shadow point, concave curve is formed by the application of the following equation.

$$T(x) = m \times \log ((\text{maximum element} - \text{shadow}) /$$
$$(\text{maximum element} - x)) / \log ((\text{maximum element} - \text{shadow}) /$$
$$(\text{maximum element} - \text{central value})) \qquad (19)$$

Here, the value m used in equations (18) and (19) represents the transform destination of the central value. By changing the value m, the center of the S-shaped curve shown in Fig. 14 can be changed. When the value m is set as the intermediate value between the maximum and minimum elements (intermediate element of the histogram), the histogram values are equally distributed on the left and right sides with the center of the histogram positioned at the center in the result of transform, and hence an image of better contrast can be obtained. The value m may be arbitrarily changed dependent on the image to be processed.

The transform function T(x) may be generated by same or different methods for luminance and saturation. For example, when color appearance closer to the original image is desired, a transform function based on linear transform, by which effect of emphasis is relatively low as compared with the S-shaped curve, may be applied for saturation.

Next, details of generating correction function C(x) for correcting the transform function calculated in step S24, based on the object color in step S25 will be described.

In the present embodiment, the method of generating the correction function C(x) by comparing the central value calculated in step S23 for luminance with the object color to adaptively changing the function which will be the base of the correction function, will be described.

Further, luminance value of the object color and the central value are compared. The result of comparison can be classified into the following three.

(1) luminance value of the object color < (central value - $\alpha$)
(2) (central value - $\alpha$) $\leqq$ luminance value of object color $\leqq$ (central value + $\alpha$)
(3) (central value + $\alpha$) < luminance value of the object color

Here, $\alpha$ is a predetermined value, and, for example, 10% of the total number of elements.

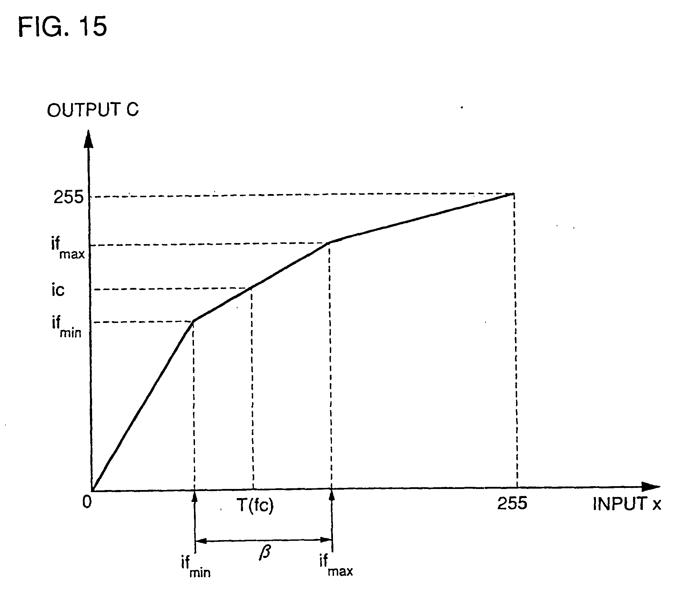

When the result of comparison is in the range (1) or (2), correction function C(x) is generated based on the trapezoidal function shown in Fig. 15. The trapezoidal function transforms the brightness of the object color to the ideal value of the object color. The object color is transformed in accordance with the transform function T(x) generated in step S24 and thereafter re-transformed in accordance with the correction function, and therefore, the following equation holds, where fc represents the brightness of the object color and ic represents the ideal value.

$$ic = C(T(fc)) \qquad (20)$$

The trapezoidal function is generated to maintain a prescribed inclination with the transformation point of T(fc) being the center as shown in Fig. 15, so as to maintain color gradation close to the object color. Here, the correction function C(x) can be define as follows.
when

$$0 \leqq x < f_{min}:$$
$$C(x) = (if_{mn} / f_{min}) \times x \qquad (21\text{-}1)$$

when

$$f_{min} \leqq x < f_{max}:$$
$$C(x) = ((if_{max} - if_{min}) / (f_{max} - f_{min})) \times$$
$$(x - f_{min}) + if_{min} \qquad (21\text{-}1)$$

when

$$f_{max} \leqq x \leqq 255:$$
$$C(x) = ((255 - if_{max}) / (255 - f_{max})) \times$$
$$(x - f_{max}) + if_{max} \qquad (21\text{-}3)$$

Here, the range β in which the inclination shown in Fig. 15 is maintained (between the point ($f_{min}$, $if_{min}$) and the point ($f_{max}$, $if_{max}$)) may be set to an appropriate value in advance, or appropriately changed dependent on the image, when information such as variance of object color in the image is available.

When the result of comparison is within the range (1) and the luminance of the object color is lower than the ideal value, it may be the case that overall image is brighter than the luminance of the object color. When the value near the object color is increased to the ideal value, however, it is possible that the overall image has lower contrast. Therefore, when luminance is to be increased with the result of comparison being in the range of (1), an appropriate measure may be taken, for example, an upper limit of increase may be provided.

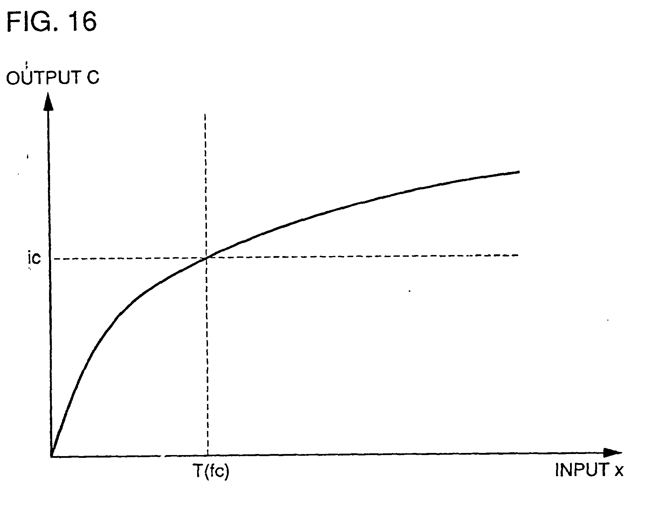

When the result of comparison is within the range of (3), the correction function C(x) is generated based on the γ function shown in Fig. 16. The γ function is represented by the following equation.

$$C(x) = \text{total element number} \times (x / \text{total element number})^{\gamma} \qquad (22)$$

The γ type function transforms such that the brightness of the object color attains to the ideal value of the object color. More specifically, as in the trapezoidal function described above, the value γ is determined to satisfy the equation (20). It should be noted, however, that as γ function is used in place of the trapezoidal function, brightness of a darker area is increased, and therefore brightness of the overall image is further improved. When the result of comparison is in the range of (3), it may be the case that the overall brightness is darker than the object color. Therefore, when the trapezoidal function is used for correcting the vicinity of the object color as in the case where the result of comparison is in the range of (1) or (2), there is a possibility that vicinity of the object color only is made unnaturally noticeable in the overall image.

By using the correction function C(x) generated in the above described manner, the transform function T(x) for brightness generated in step S24 can be corrected, to provide ideal value for an input of the object color.

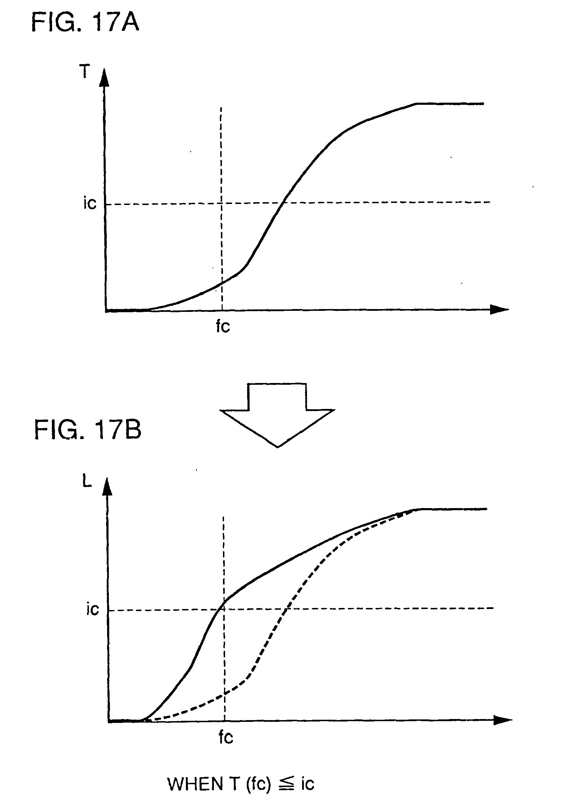

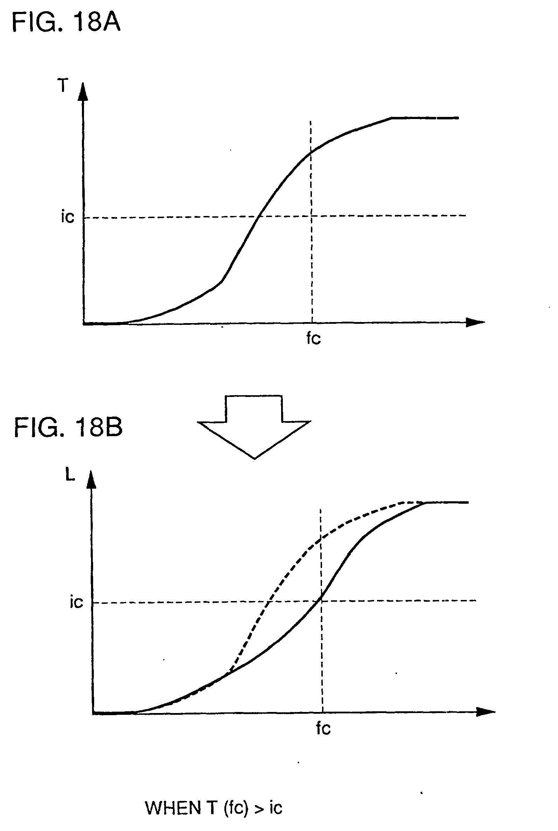

Figs. 17A, 17B,18A and 18B are schematic representation of the final transform function L(x) provided by correcting transform function T(x) by correction function C(x). Fig. 17A represents transform function T(x), and Fig. 17B represents final transform function L(x) when the state of T(fc) $\leqq$ ic is corrected, where fc represents brightness of the object color and ic represents ideal value.

Fig. 18A represents transform function T(x), and Fig. 18B represents final transform function L(x) when the state of T(fc) > ic is corrected, where fc represents brightness of the object color and ic represents ideal value.

Correction function C(x) may be generated by the same method or different method for saturation and luminance. When correction based on γ function is performed on saturation in the above described method, excessive increase is possible in the area of low saturation. When the overall image is dark in general, it is often the case that saturation of the low saturation area is unstable. Therefore, when the saturation of the area of low saturation is increased generally, the overall output would possibly be unnatural. In such a situation, it may be desirable to use the trapezoidal function and not the correction function based on γ function when saturation is to be increased (that is, when ideal saturation is higher than the saturation of the object color). Alternatively, a function satisfying the equation (22), for example, a simple linear function, may be used to generate correction function C(x), rather than the above described method, as the correction function of saturation.

Based on the color transform function generated in the above described manner, the color adjusting process of step S12 is performed on the original image of Fig. 7A. The resulting image obtained by transforming the color adjusted image stored in storage unit 13 is again stored in storage unit 13 and displayed, as output image 32 shown in Fig. 7B, on display unit 15.

By the above described operation, as the specific area of the input original image is designated, it becomes possible to detect color deviation, insufficient contrast and the like based on the color, saturation and luminance of designated area of the original image and to obtain an image of which image quality is adjusted.

From the foregoing, it can be understood that the present invention is applicable to a system having a unit for obtaining an image, a unit for storing an image or a unit for displaying an image allowing the user to designate an arbitrarily area on the image by using a coordinate input unit such as a mouse, a pen or a tablet. For example, the present invention is applicable to word processors, personal computers, work stations, personal digital assistants, copying machines, scanners, facsimile machines, TV receivers, video cassette recorders, video cameras, digital still cameras and the like.

The image quality adjusting apparatus, the image quality adjusting method and the recording medium storing the image quality adjusting program in accordance with embodiments of the present invention can enable the following operations.

In the image quality adjusting apparatus structured as described above, an original image input by an image input unit 11 is first displayed on display unit 15. On the displayed original image, an operator designates a desired area using an area designating unit 12, which is a pointing device such as a mouse or a pen.

Based on the designated area, an object area which is considered designated by the operator is extracted, and the color of the object area is found. More specifically, by extracting the object area in the designated area and by calculating average and variance of pixel values of the original image, the object color is detected.

Then, a color transform function is generated so that detected object area color attains to an ideal color and that color balance of the overall image is satisfactory, and in accordance with the color transform function, the original image is transformed.

For the transformed image, histograms of luminance and saturation are provided, transform functions are generated such that the luminance and saturation of the overall image are well balanced, and at portions near the luminance and saturation of the detected object area color, ideal object color is attained. Based on the transform functions, the image is finally transformed.

In this manner, it becomes possible to realize image quality adjustment to attain a prescribed quality in a simple manner, without requiring special technique or skill.

The image quality adjusting process is capable of adjusting contrast of luminance as well as modification of color deviation. Further, as the area is designated, it is possible to transform a color of a specific object to an ideal color while performing appropriate color deviation correction and contrast adjustment of portions other than the specific object.

By the image quality adjusting apparatus structured as described above, when a portrait photograph image, including a person as an object in the input original image is the object of processing, it is possible by simple operation to transform skin color to an ideal color and to perform appropriate color deviation correction and contrast adjustments on areas other than the skin.

As described above, the image quality adjusting apparatus in accordance with the first embodiment makes it possible to perform image quality adjustment to attain a prescribed quality in a simple operation, without requiring any high technique or skill. Further, the image adjusting process allows not only contrast adjustment of luminance but also color deviation correction. Further, as an area is designated, it becomes possible to improve color reproductivity of a specific object while performing appropriate color deviation correction and contrast adjustment of portions other than the specific object.

Further, it is possible to improve color reproductivity of the object area of the designated area of the original image, while attaining satisfactory balance of color, luminance and saturation of the overall image. Further, appropriate color deviation correction and contrast adjustment can be attained by a simple operation to provide ideal object color even at portions where luminance and saturation are close to those of the detected object area color.

Although the present invention has been described and illustrated in detail, it is clearly understood that the same is by way of illustration and example only and is not to be taken by way of limitation, the scope of the present invention being limited only by the terms of the appended claims.

**Claims**

**1.** An image quality adjusting apparatus, comprising:

a display unit (15) displaying an input original image;

an area designating unit (12) for designating an arbitrary area of the original image displayed on said display unit (15); and

an image quality adjusting unit (14) adjusting image quality including color of said input original image;

said image quality adjusting unit (14) including

an object color detecting unit (14a) detecting an object color of the area designated by said area designating unit (12), and said image quality adjusting unit (14) being **characterized in that** it further includes

a color adjusting unit (14b) generating a color transform function wherein the intensities of color components of the object color detected by said object color detecting unit (14a) are mapped to respective predetermined values and the intensities of color components close to white in said input original image as a whole are also mapped to respective predetermined values, and adjusting the intensity of each color component using the color transform function.

2. The image quality adjusting apparatus according to claim 1 wherein
said object color detecting unit (14a) extracts an object area including the area designated by said area designating unit (12), and detects as the object color of said designated area, an average value of pixel values in said object area of said input original image.

3. The image quality adjusting apparatus according to claim 1, wherein
said image quality adjusting unit (14) further includes a luminance saturation adjusting unit (14c) adjusting luminance and saturation of said input original image.

4. The image quality adjusting apparatus according to claim 3, wherein
said luminance saturation adjusting unit (14c) forms histograms of luminance and saturation of said input original image, generates a transform function which is an s-shaped curvilinear function based on a logarithmic function for adjusting said histograms such that luminance and saturation of said input original image are satisfactory, and adjusts the luminance and saturation of said input original image using the transform function.

5. The image quality adjusting apparatus according to claim 4, wherein said luminance saturation adjusting unit (14c) generates a correction function for correcting said transform function, and adjusts the luminance and saturation of said input original image using said transform function and said correction function.

6. A method of image quality adjustment, comprising the steps of
displaying an input original image;
designating an arbitrary area of said displayed original image; and
adjusting image quality including color of said input original image, based on pixel values of said designated area, wherein
said step of adjusting said image quality includes the step of detecting an object color of the designated area, **characterized in that** said step of adjusting said image quality further includes the step of performing color adjustment of said detected object color by generating a color transform function,
wherein the intensities of color components of the detected object color are mapped to respective predetermined values and the intensities of color components close to white in said input original image as a whole to respective predetermined values, and adjusting the intensity of each color component using the color transform function.

7. The method of image quality adjustment according to claim 6 wherein
said step of adjusting image quality further includes the step of adjusting luminance and saturation of said input original image.

8. A medium recording an image quality adjusting program for performing the steps of a method according to claim 6 or claim 7.

9. A computer program for performing a method as claimed in claim 6 or claim 7.


**Patentansprüche**

1. Vorrichtung zum Einstellen der Bildqualität, mit:

   - einer Anzeigeeinheit (15) zum Anzeigen eines eingegebenen originalbilds;

- einer Gebietsspezifiziereinheit (12) zum Spezifizieren eines beliebigen Gebiets des auf der Anzeigeeinheit (15) angezeigten Originalbilds; und

- einer Bildqualität-Einstelleinheit (14) zum Einstellen der Bildqualität einschließlich der Farbe des eingegebenen Originalbilds;

- wobei die Bildqualität-Einstelleinheit (14) eine Objektfarbe-Erfassungseinheit (14a) zum Erfassen der Objektfarbe des durch die Gebietsspezifiziereinheit 812) spezifizierten Gebiets aufweist; und

- wobei die Bildqualität-Einstelleinheit (14) **dadurch gekennzeichnet ist, dass** sie ferner eine Farbeinstelleinheit (14b) zum Erzeugen einer Farbtransformationsfunktion, wobei die Intensitäten von Farbkomponenten der durch die Objektfarbe-Erfassungseinheit (14a) erfassten Objektfarbe auf jeweils vorbestimmte Werte abgebildet werden und auch die Intensitäten von Farbkomponenten, die im eingegebenen Originalbild insgesamt nahe bei weiß liegen, auf jeweils vorbestimmte Werte abgebildet werden, und zum Einstellen der Intensität jeder Farbkomponente unter Verwendung der Farbtransformationsfunktion.

2. Vorrichtung zum Einstellen der Bildqualität nach Anspruch 1, bei der die Objektfarbe-Erfassungseinheit (14a) ein Objektgebiet einschließlich des durch die Gebietsspezifiziereinheit (12) spezifizierten Gebiets entnimmt und als Objektfarbe dieses spezifizierten Gebiets den Mittelwert von Pixelwerten im genannten Objektgebiet des eingegebenen originalbilds erfasst.

3. Vorrichtung zum Einstellen der Bildqualität nach Anspruch 1, bei der die Bildqualität-Einstelleinheit (14) ferner über eine Luminanz-Sättigung-Einstelleinheit (14c) zum Einstellen der Luminanz und der Sättigung des eingegebenen originalbilds verfügt.

4. Vorrichtung zum Einstellen der Bildqualität nach Anspruch 3, bei der die Luminanz-Sättigung-Einstelleinheit (14c) Histogramme der Luminanz und der Sättigung des eingegebenen Originalbilds bildet, eine Transformationsfunktion als s-förmige, krummlinige Funktion auf Grundlage einer logarithmischen Funktion zum Einstellen der Histogramme in solcher Weise, dass die Luminanz und die Sättigung des eingegebenen Originalbilds zufriedenstellend sind, erzeugt, und sie die Luminanz und die Sättigung des eingegebenen originalbilds unter Verwendung der Transformationsfunktion einstellt.

5. Vorrichtung zum Einstellen der Bildqualität nach Anspruch 4, bei der die Luminanz-Sättigung-Einstelleinheit (14c) eine Korrekturfunktion zum Korrigieren der Transformationsfunktion erzeugt und die Luminanz und die Sättigung des eingegebenen Originalbilds unter Verwendung der Transformationsfunktion und der Korrekturfunktion einstellt.

6. verfahren zum Einstellen der Bildqualität, mit den folgenden Schritten:

- Anzeigen eines eingegebenen Originalbilds;
- Spezifizieren eines beliebigen Gebiets des angezeigten Originalbilds und
- Einstellen der Bildqualität einschließlich der Farbe des eingegebenen Originalbilds auf Grundlage von Pixelwerten des spezifizerten Gebiets;
- wobei der Schritt des Einstellens der Bildqualität den Schritt des Erfassens einer Objektfarbe des spezifizierten Gebiets beinhaltet;

**dadurch gekennzeichnet, dass**

- der Schritt des Einstellens der Bildqualität ferner den Schritt des Ausführens einer Farbeinstellung der erfassten Objektfarbe durch Erzeugen einer Farbtransformationsfunktion beinhaltet;
- wobei die Intensitäten von Farbkomponenten der erfassten Objektfarbe auf jeweils vorbestimmte Werte abgebildet werden und die Intensitäten von Farbkomponenten, die im eingegebenen Originalbild insgesamt nahe bei weiß liegen, auf jeweils vorbestimmte Werte abgebildet werden, und die Intensität jeder Farbkomponente unter Verwendung der Farbtransformationsfunktion eingestellt wird.

7. Verfahren zum Einstellen der Bildqualität nach Anspruch 6, bei dem der Schritt des Einstellens der Bildqualität ferner den Schritt des Einstellens der Luminanz und der Sättigung des eingegebenen Originalbilds beinhaltet.

8. Aufzeichnungsträger, auf dem ein Programm zum Einstellen der Bildqualität zum Ausführen der Schritte eines Verfahrens gemäß dem Anspruch 6 oder dem Anspruch 7 aufgezeichnet ist.

9. Computerprogramm zum Ausführen eines Verfahrens, wie es im Anspruch 6 oder Anspruch 7 beansprucht ist.

**Revendications**

1. Appareil de réglage de la qualité d'image, comprenant :

   une unité de visualisation (15) affichant une image originale d'entrée ;
   une unité de désignation de zone (12) destinée à désigner une zone arbitraire de l'image originale affichée sur ladite unité de visualisation (15) ; et
   une unité de réglage de la qualité d'image (14) réglant la qualité d'image comprenant la couleur de ladite image originale d'entrée ;
   ladite unité de réglage de la qualité d'image (14) comprenant
   une unité de détection de la couleur d'objet (14a) détectant une couleur d'objet de la zone désignée par ladite unité de désignation de zone (12), et ladite unité de réglage de la qualité d'image (14) étant **caractérisée en ce qu'**elle comprend en outre
   une unité de réglage de la couleur (14b) générant une fonction de transformation de couleur, dans laquelle les intensités de composantes couleur de la couleur d'objet détectées par ladite unité de détection de la couleur d'objet (14a) sont mappées sur des valeurs prédéterminées respectives et les intensités de composantes couleur proches du blanc dans ladite image originale d'entrée comme un tout sont également mappées sur des valeurs prédéterminées respectives, et le réglage de l'intensité de chaque composante couleur utilisant la fonction de transformation de couleur.

2. Appareil de réglage de la qualité d'image selon la revendication 1, dans lequel ladite unité de détection de la couleur d'objet (14a) extrait une zone d'objet comprenant la zone désignée par ladite unité de désignation de zone (12), et détecte comme la couleur d'objet de ladite zone désignée, une valeur moyenne de valeurs de pixel dans ladite zone d'objet de ladite image originale d'entrée.

3. Appareil de réglage de la qualité d'image selon la revendication 1, dans lequel ladite unité de réglage de la qualité d'image (14) comprend, en outre, une unité de réglage de saturation de luminance (14c) réglant la luminance et la saturation de ladite image originale d'entrée.

4. Appareil de réglage de la qualité d'image selon la revendication 3, dans lequel ladite unité de réglage de saturation de luminance (14c) forme des histogrammes de luminance et de saturation de ladite image originale d'entrée, génère une fonction de transformation qui est une fonction curvilinéaire en forme de s basée sur une fonction logarithmique pour régler lesdits histogrammes, de telle sorte que la luminance et la saturation de ladite image originale d'entrée soient satisfaisantes, et règle la luminance et la saturation de ladite image originale d'entrée utilisant la fonction de transformation.

5. Appareil de réglage de la qualité d'image selon la revendication 4, dans lequel ladite unité de réglage de saturation de luminance (14c) génère une fonction de correction pour corriger ladite fonction de transformation, et règle la luminance et la saturation de ladite image originale d'entrée utilisant ladite fonction de transformation et ladite fonction de correction.

6. Procédé de réglage de la qualité d'image, comprenant les étapes consistant à
   afficher une image originale d'entrée ;
   désigner une zone arbitraire de ladite image originale affichée ; et
   régler la qualité d'image comprenant la couleur de ladite image originale d'entrée, en se basant sur les valeurs de pixel de ladite zone désignée, dans lequel
   ladite étape de réglage de ladite qualité d'image comprend l'étape de détection d'une couleur d'objet de la zone désignée, **caractérisée en ce que** ladite étape de réglage de ladite qualité d'image comprend en outre l'étape d'exécution du réglage de la couleur de ladite couleur d'objet détectée en générant une fonction de transformation de couleur,
   dans lequel les intensités de composantes couleur de la couleur d'objet détectée sont mappées pour des valeurs prédéterminées respectives et les intensités de composantes couleur proches du blanc dans ladite image originale d'entrée comme un tout pour des valeurs prédéterminées respectives, et régler l'intensité de chaque composante couleur utilisant la fonction de transformation de couleur.

7. Procédé de réglage de la qualité d'image selon la revendication 6, dans lequel ladite étape de réglage de la qualité d'image comprend, en outre, l'étape de réglage de la luminance et de la saturation de ladite image originale d'entrée.

8. Support d'enregistrement d'un programme de réglage de la qualité d'image destiné à exécuter les étapes d'un procédé selon la revendication 6 ou la revendication 7.

9. Programme informatique destiné à exécuter un procédé selon la revendication 6 ou la revendication 7.

FIG. 1A

NUMBER OF
PIXELS

R

101

PIXEL
VALUE

FIG. 1B

NUMBER OF
PIXELS

G

102

PIXEL
VALUE

FIG. 1C

NUMBER OF
PIXELS

B

103

PIXEL
VALUE

FIG. 2A

NUMBER OF
PIXELS

R

201

PIXEL
VALUE

FIG. 2B

NUMBER OF
PIXELS

G

202

PIXEL
VALUE

FIG. 2C

NUMBER OF
PIXELS

B

203

PIXEL
VALUE

FIG. 3

52

51
53

54

57 55

58

TO IMAGE INPUT UNIT 11

56

FIG. 4

CPU 60, ROM 61, RAM 62, 63, 51, 54, MAGNETIC TAPE DRIVE 53, IMAGE INPUT UNIT 11, CD-ROM DRIVE 57, 58, 56, 55, 52

## FIG. 5

AREA DESIGNATING UNIT ~12

STORAGE UNIT ~13

IMAGE INPUT UNIT ~11

ARITHMETIC PROCESSING UNIT ~14

OBJECT COLOR DETECTING UNIT ~14a

COLOR ADJUSTING UNIT ~14b

LUMINANCE·SATURATION ADJUSTING UNIT ~14c

DISPLAY UNIT ~15

EXTERNAL STORAGE UNIT ~16

## FIG. 6

~21

OBJECT COLOR DETECTING PROGRAM ~21a

COLOR ADJUSTING PROGRAM ~21b

LUMINANCE·SATURATION ADJUSTING PROGRAM ~21c

FIG. 7A

31b

31a

FIG.7B

32

FIG. 8

```
          ┌──────────────┐
          │    START     │
          └──────┬───────┘
                 │
                 ▼
    ┌───────────────────────┐
    │  INPUT ORIGINAL IMAGE │──S1
    └───────────┬───────────┘
                │
                ▼
    ┌───────────────────────┐
    │ DISPLAY ORIGINAL IMAGE│──S2
    └───────────┬───────────┘
                │
                ▼
    ┌───────────────────────┐
    │    DESIGNATE AREA     │──S3
    └───────────┬───────────┘
                │
                ▼
    ┌───────────────────────┐
    │  EXTRACT OBJECT AREA  │──S4
    └───────────┬───────────┘
                │
                ▼
    ┌───────────────────────┐
    │  DETECT OBJECT COLOR  │──S5
    └───────────┬───────────┘
                │
                ▼
    ┌───────────────────────┐
    │ COLOR ADJUSTING PROCESS│──S6
    └───────────┬───────────┘
                │
                ▼
    ┌───────────────────────┐
    │ LUMINANCE·SATURATION  │──S7
    │   ADJUSTING PROCESS   │
    └───────────┬───────────┘
                │
                ▼
          ┌──────────────┐
          │     END      │
          └──────────────┘
```

FIG9A  FIG.9B  FIG.9C  FIG.9D

## FIG. 10

fr(R)

255

IwhiteR

ImR

0　　　　　　　mR　　　whiteR　　255　　R

## FIG. 11

START

DETECT WHITE ⎯ S11

GENERATE COLOR TRANSFORM FUNCTION
BASED ON WHITE AND OBJECT COLOR ⎯ S12

TRANSFORM COLOR IN ACCORDANCE
WITH GENERATED FUNCTION ⎯ S13

END

FIG. 12

```
            ┌─────────────┐
            │    START    │
            └──────┬──────┘
                   ▼
        ┌──────────────────────┐
        │   FORM HISTOGRAM     ├── S21
        └──────────┬───────────┘
                   ▼
        ┌──────────────────────┐
        │  SMOOTH HISTOGRAM    ├── S22
        └──────────┬───────────┘
                   ▼
    ┌──────────────────────────────┐
    │ DETERMINE HISTOGRAM PARAMETER ├── S23
    └──────────────┬───────────────┘
                   ▼
    ┌──────────────────────────────┐
    │ GENERATE TRANSFORM FUNCTION T ├── S24
    │ BASED ON HISTOGRAM PARAMETER  │
    └──────────────┬───────────────┘
                   ▼
    ┌──────────────────────────────┐
    │ GENERATE CORRECTION FUNCTION C├── S25
    │ BASED ON AVERAGE SKIN COLOR   │
    └──────────────┬───────────────┘
                   ▼
    ┌──────────────────────────────┐
    │ GENERATE TRANSFORM FUNCTION L ├── S26
    │ BY T * C                      │
    └──────────────┬───────────────┘
                   ▼
            ┌─────────────┐
            │     END     │
            └─────────────┘
```

## FIG. 13A

FORM HISTOGRAM

## FIG. 13B

SMOOTH HISTOGRAM

↑ SHADOW    ↑ CENTRAL VALUE    ↑ HIGHLIGHT

DETERMINE
HISTOGRAM PARAMETER

## FIG. 14

FIG. 15

FIG. 16

OUTPUT C

ic

T(fc)

INPUT x

FIG. 17A

FIG. 17B

WHEN T (fc) ≦ ic

FIG. 18A

FIG. 18B

WHEN T (fc) > ic

FIG. 19A

FIG. 19B

RGB CUBE

PARALLEL PROJECTION OF RGB
CUBE TO I CONSTANT PLANE

FIG. 19C

FIG. 19D

$S = \dfrac{WP}{WE}$

DEFINITION OF H AND S

HSI HEXAGONAL COLOR MODEL